# EUROPÄISCHE PATENTSCHRIFT

(11) **EP 2 390 142 B1**
(45) Veröffentlichungstag und Bekanntmachung des Hinweises auf die Patenterteilung: **31.07.2013**
(21) Anmeldenummer: 10007038.2
(22) Anmeldetag: 08.07.2010
(51) Int. Cl.: B60R 3/02

(54) **Vorrichtung zur ausfahrbaren Aufnahme einer Rampe**
Device for extendible holder for a ramp
Dispositif destiné à la réception démontable d'une rampe

(30) Priorität: 31.05.2010 EP 10005640
(43) Veröffentlichungstag der Anmeldung: 30.11.2011
(73) Patentinhaber: Hübner Transportation GbmH, 34123 Kassel (DE)
(72) Erfinder: Persson, Martin, 27539 Sjöbo (SE); Hernvall, Jan-Erik, 27539 Sjöbo (SE)
(74) Vertreter: Walther, Walther & Hinz GbR

(56) Entgegenhaltungen:
- EP-A1- 1 393 977
- EP-A1- 1 621 404
- EP-A1- 1 747 939
- WO-A1-98/06370
- WO-A1-99/10199
- WO-A1-2008/089547
- US-B1- 6 869 092

## Beschreibung

Die Erfindung betrifft eine Vorrichtung zur ausfahrbaren Aufnahme einer Rampe, wobei die Vorrichtung an einem Fahrzeug im Bereich des Türeinstiegs anbringbar ist, wobei die Vorrichtung eine Antriebseinrichtung für die Rampe umfasst, wobei die Antriebseinrichtung einen Schlitten aufweist, wobei der Schlitten mit der Rampe in Verbindung steht, wobei die Antriebseinrichtung mit mindestens einem am Fahrzeug angeordneten Kraftübertragungsglied in Eingriff bringbar ist.

Rampen zur Anbringung im Bereich des Einstiegs eines Fahrzeugs, z. B. eines Busses, sind aus dem Stand der Technik hinreichend bekannt. So sind insbesondere bekannt sogenannte Rampen, die per Hand ausgeklappt werden, um beispielsweise einem Rollstuhlfahrer das Einfahren in das Innere eines Nahverkehrsmittels, insbesondere eines Busses zu ermöglichen (EP 1 837 233 A1). Des Weiteren sind motorisch betriebene Rampen bekannt, bei denen zur Verschieblichkeit zu beiden Seiten der Rampenplattform sogenannte Rampenwagen vorgesehen sind, die durch Spindeln verschoben werden. Die Spindeln selbst sind hierbei motorisch angetrieben (DE 10 043 561). Solche Rampen sind unmittelbar unter dem Fahrzeugboden, beispielsweise eines Busses, angeordnet. Es ist allerdings auch bekannt, dass diese Rampen, die zum Schutz vor Feuchtigkeit und Verschmutzung in einer Kassette untergebracht sind, nicht nur unter dem Fahrzeugboden anzuordnen, sondern beispielsweise auch in einer entsprechenden Aussparung unterhalb des Türeinstiegs eines Fahrzeugs.

Aus der gattungsgemäßen EP 1 747 939 ist in diesem Zusammenhang eine motorisch betriebene Rampe bekannt, bei der durch einen Antriebsmotor durch einen Riementrieb zwei parallel in einer Kassette verlaufende Spindeln angetrieben werden, wobei jede Spindel durch eine Spindelmutter mit dem Riementrieb in Verbindung steht. Der Antrieb selbst befindet sich an dem hinteren Ende der Rampe und ist von außen ohne Ausbau der gesamten Vorrichtung nicht zugänglich.

Nun ist bekannt, dass insbesondere im Winter die Rampe einer starken Verschmutzung ausgesetzt ist. Dies liegt insbesondere daran, dass beim Benutzen der Rampe häufig genug Schnee und Eis sowie Splitt und Salz beim Einziehen der Rampe mit in das Innere der Rampe mithin in die Kassette eingezogen werden, sodass sich häufig ein Salz-Splitt-Gemisch im Bereich in der Antriebseinrichtung ablagert. Die Folge hiervon sind Störungen am Antrieb, die nicht selten dazu führen, dass der Antriebsmotor selbst Schaden nimmt, bzw. die elektrische Steuerung für die Antriebseinrichtung aufgrund von Feuchtigkeit ebenfalls beschädigt wird. Bislang ist es so, dass im Falle einer solchen Beschädigung zur Reparatur des Antriebs die gesamte Vorrichtung zur Aufnahme der Rampe, also die gesamte Kassette, die die Rampe aufnimmt, ausgebaut werden muss. Dies ist überaus aufwendig und teuer.

Die der Erfindung zugrunde liegende Aufgabe besteht demzufolge darin, die Wartung und ggf. die Reparatur einer ausfahrbaren Rampe zu erleichtern.

Zur Lösung der Aufgabe wird erfindungsgemäß vorgeschlagen, dass die Antriebseinrichtung einen auf einem Schlitten angeordneten Antriebsmotor aufweist, wobei der Schlitten mit der Rampe in Verbindung steht.

Die Antriebseinrichtung steht mit der Rampe in Verbindung. Die Antriebseinrichtung ist des Weiteren mit dem Kraftübertragungsglied in oder außer Eingriff bringbar. Für den Fall, dass die Antriebseinrichtung nicht mit dem Kraftübertragungsglied in Eingriff steht, kann dann gegebenenfalls nach Lösen etwaiger Anschläge im Frontbereich der Vorrichtung, die Rampe einschließlich Antriebseinrichtung aus der Vorrichtung herausgezogen und gegebenenfalls durch eine Austauschrampe ersetzt werden. Es ist demzufolge nicht erforderlich, die gesamte Vorrichtung, und hier insbesondere die Kassette, in der die Rampe somit Antriebseinrichtung untergebracht ist, auszubauen. Dies ist insbesondere insofern von Vorteil, als der Einbau der Kassette es erfordert, dass insbesondere dann, wenn die Kassette unten am Fahrzeugboden im Bereich des Einstiegs angeordnet ist, das Fahrzeug über eine Grube gefahren werden muss, da anders die Kassette zum Ausbau nicht zugänglich ist.

Vorteilhafte Merkmale und Ausgestaltungen der Erfindung ergeben sich aus den Unteransprüchen.

So ist insbesondere vorgesehen, dass der Antriebsmotor der Antriebseinrichtung mit mindestens einem Kraftübertragungsglied in Verbindung steht. Das heißt, es besteht eine unmittelbare Verbindung zwischen dem Antriebsmotor und dem Kraftübertragungsglied, wobei insbesondere dann, wenn das mindestens eine Kraftübertragungsglied als Zahnstange ausgebildet ist, der Antriebsmotor durch ein entsprechendes Ritzel mit der Zahnstange in Eingriff bringbar ist.

Um nun dafür zu sorgen, dass die Rampe beim Ausfahren nicht verkantet, sind vorzugsweise zwei parallel zueinander verlaufende, an dem Fahrzeug angeordnete Kraftübertragungsglieder, insbesondere in Form von parallel zueinander verlaufender Zahnstangen, vorgesehen, wobei der Antriebsmotor mit beiden Kraftübertragungsgliedern in Verbindung steht, wobei in diesem Zusammenhang vorteilhaft das Ritzel, das mit der einen ersten Zahnstange in Verbindung steht, eine Welle aufweist, wobei die Welle ein weiteres Ritzel zeigt, das in Eingriff mit der anderen zweiten Zahnstange steht.

Um die Montage der Vorrichtung zu erleichtern, ist, wie bereits erläutert, vorgesehen, die Vorrichtung in einer Kassette unterzubringen, wobei in der Kassette die Rampe und die Antriebseinrichtung angeordnet sind, wobei die Kassette im Einbauzustand über der Rampe eine Abdeckplatte aufweist, an der die mindestens eine Zahnstange befestigt ist. Das heißt, dass die Zahnstange oder im allgemeinen Sinne das Kraftübertragungsglied nicht unmittelbar mit dem Fahrzeug in Verbindung steht, sondern mittelbar durch die zuvor bereits erwähnte Abdeckplatte. Zum Schutz der in der Kassette angeordneten Bauteile ist vorgesehen, dass die Kassette vorzugsweise eine Bodenplatte aufweist, was auch die Montage der Vorrichtung als Einheit ermöglicht. In diesem Zusammenhang ist des Weiteren vorgesehen, dass die Kassette längs zur Ausstellrichtung der Rampe Seitenwände aufweist, wobei die Seitenwände längs verlaufende Nuten zur geführten Aufnahme der Rampe selbst zeigen.

Am vorderen Ende der Kassette ist zu beiden Seiten des vorderen Endes der Kassette jeweils ein Anschlag vorgesehen, der verhindert, dass die Rampe einschließlich des Schlittens unbeabsichtigt vollständig aus der Kassette herausgezogen oder herausgefahren werden könnte. Der Anschlag ist lösbar, sodass nach Lösen der Anschläge die Rampe einschließlich der Antriebseinrichtung z. B. zum Zwecke des Austausches herausgezogen werden kann. Um die Lösbarkeit der Anschläge von der Kassette zu erleichtern, auch vor dem Hintergrund einer schnellen Austauschbarkeit der Rampe, ist nach einem besonders vorteilhaften Merkmal der Erfindung vorgesehen, dass der Anschlag quer zur Ausfahrrichtung der Rampe von der Kassette durch eine Nutführung verschieblich gehalten ist, wobei zur Arretierung des Anschlags in der Nutführung ein Druckstück vorgesehen ist. Ein Druckstück stellt sich als eine in einer Hülse angeordnete federbelastete Kugel dar, wobei die Hülse an ihrem dem Anschlag zugewandten Ende einen nach innen gerichteten Vorsprung aufweist, der verhindert, dass die Kugel über ihren Äquator heraus aus der Hülse ragt. Der Anschlag besitzt korrespondierend zu der Form der Kugel eine entsprechende schalenförmige Ausnehmung. Zum Lösen des Anschlags muss somit der Anschlag nur gegen die Kraft der federbelasteten Kugel aus der Nutführung gezogen werden. Hierzu ist kein gesondertes Werkzeug erforderlich.

Bereits zu eingangs wurde erwähnt, dass die Rampe, um ein unbeabsichtigtes Ausfahren zu verhindern, im eingefahrenen Zustand arretierbar ist. In diesem Zusammenhang umfasst die Vorrichtung vorteilhaft eine Riegeleinrichtung für die Rampe. Die Riegeleinrichtung zeigt im Einzelnen einen Riegel, der auf dem Schlitten anordbar ist, wobei der Riegel in Eingriff mit einem feststehenden Teil der Vorrichtung und hier insbesondere mit dem Kraftübertragungsglied, vorteilhaft jedoch mit der Zahnstange bringbar ist. Die Riegeleinrichtung umfasst des Weiteren ein Entriegelungsglied, wobei durch das Entriegelungsglied der Riegel verschieblich ist, und zwar vorteilhaft in dem Sinne, dass der Riegel außer Eingriff mit dem Kraftübertragungsglied und hier insbesondere mit der Zahnstange bringbar ist. Das Entriegelungsglied ist vorteilhaft als Stange ausgebildet, die bis zum vorderen Ende der Kassette reicht. Hieraus wird deutlich, dass bei Öffnen der am vorderen Ende der Kassette angebrachten schwenkbaren Klappe dieses Entriegelungsglied manuell erfassbar ist, durch Ziehen des als Stange ausgebildeten Entriegelungsgliedes der Riegel außer Eingriff mit der Zahnstange gebracht wird und hiernach die Rampe samt Schlitten, auf dem sich der Antrieb mit der elektrischen Steuerung befindet, nach Entfernen der Anschläge herausgezogen werden kann.

Wie bereits an anderer Stelle erläutert, ist dafür Sorge zu tragen, dass im eingefahrenen Zustand der Rampe, diese nicht unbeabsichtigt ausfährt. Insofern ist eine Arretierung vorgesehen, die - wie bereits beschrieben - durch einen Riegel bewirkt wird, der auf dem Schlitten angeordnet ist und der in Eingriff mit beispielsweise der Zahnstange bringbar ist. Um nun die Rampe nicht immer manuell entriegeln zu müssen, ist nach einem weiteren Merkmal der Erfindung vorgesehen, dass das Entriegelungsglied als motorischer Antrieb ausgebildet ist, der mit dem Riegel in Verbindung steht, wobei bei Betätigung des motorischen Antriebes der Riegel außer Eingriff mit der Zahnstange bringbar ist.

Die Rampe steht mit dem Schlitten nach Art eines Scharniers gelenkig in Verbindung, sodass sich die Rampe beim Ausfahren abklappen kann.

Um zu gewährleisten, dass im ausgefahrenen Zustand der Rampe zwischen der Rampe selbst und dem Boden des Fahrzeugs, beispielsweise eines Busses, kein Absatz entsteht, besitzt die Rampe am hinteren Ende, also im Bereich der Anordnung des Schlittens an der Rampe, mindestens einen, vorzugsweise jedoch zwei zu beiden Seiten der Rampe angeordnete Kniehebel, die mit den am vorderen Ende der Kassette angeordneten Anschlägen derart zusammenwirken, dass bei Auftreffen der Kniehebel an dem Anschlag die Kniehebel verschwenken und die Rampe am hinteren, also dem Ende, das der Kassette bzw. dem Boden des Fahrzeugs unmittelbar benachbart ist, hochgeschwenkt wird. Die Kniehebel bilden hierbei die Verbindung zwischen Rampe einerseits und Schlitten andererseits, wobei die Kniehebel die scharnierartige Verbindung zwischen Rampe und Schlitten bewirken.

Anhand der Zeichnungen wird die Erfindung nachstehend beispielhaft näher erläutert.
- Fig. 1: zeigt schematisch ein Fahrzeug mit einer Vorrichtung zur Aufnahme einer Rampe, wobei die Rampe im ausgefahrenen Zustand dargestellt ist;
- Fig. 2: zeigt eine perspektivische Ansicht von oben auf die Vorrichtung zur ausfahrbaren Aufnahme einer Rampe, wobei die Abdeckplatte der Kassette weggelassen ist;
- Fig. 3: zeigt die Einzelheit x in vergrößerter Darstellung;
- Fig. 4: zeigt die Einzelheit Y in vergrößerter Darstellung;
- Fig. 5: zeigt das vordere Ende in der Vorrichtung mit der Rampe im eingefahrenen Zustand, wobei das stangenförmige Entriegelungsglied erkennbar ist;
- Fig. 6: zeigt eine Darstellung gemäß Fig. 2, wobei die Rampe in teilweise ausgefahrenem Zustand dargestellt ist;

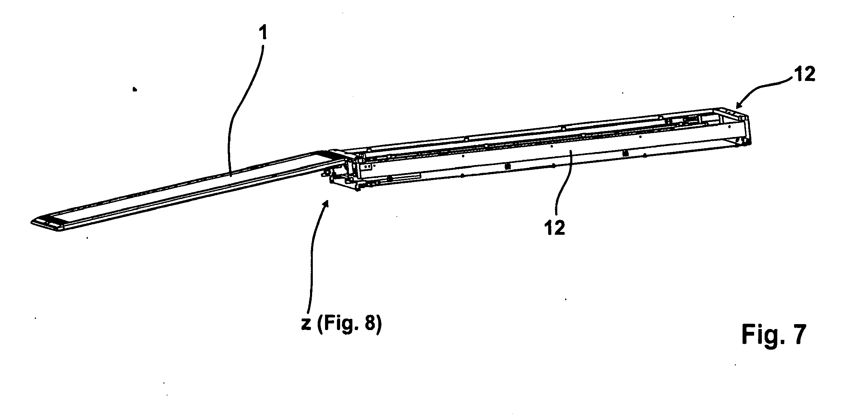

- Fig. 7: zeigt eine Darstellung gemäß Fig. 6, wobei die Rampe in vollständig ausgefahrenem und angehobenem Zustand dargestellt ist;
- Fig. 8: zeigt die Einzelheit z aus Fig. 7 in vergrößerter Darstellung;
- Fig. 9: zeigt die Anordnung des Anschlags in der Kassette im arretierten Zustand;
- Fig. 10: zeigt den Anschlag in gelösten Zustand;
- Fig. 10a: zeigt das Druckstück.

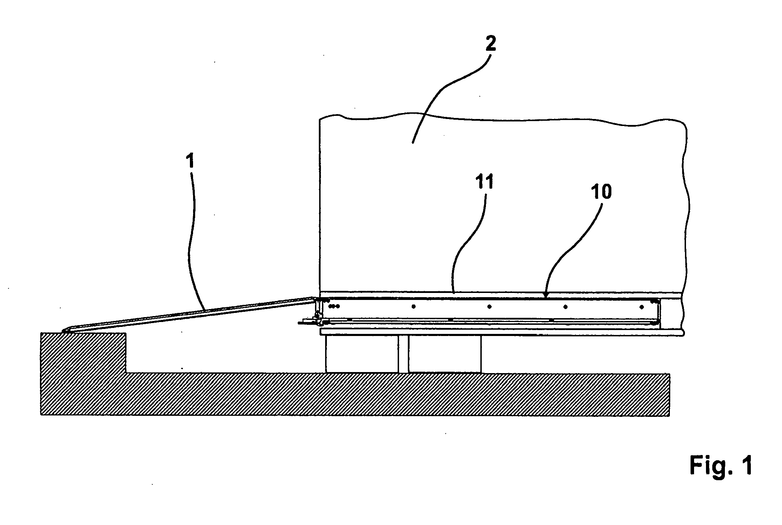

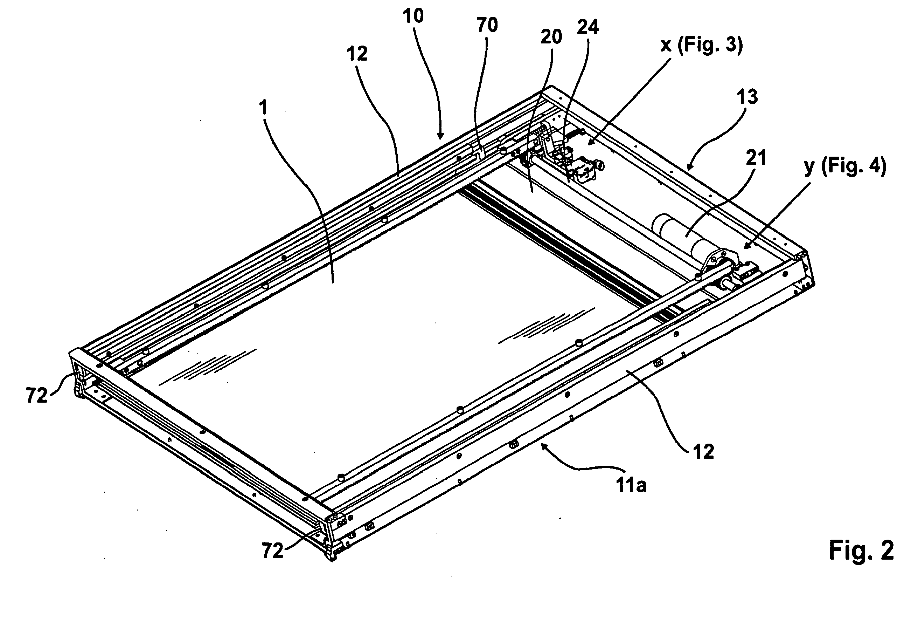

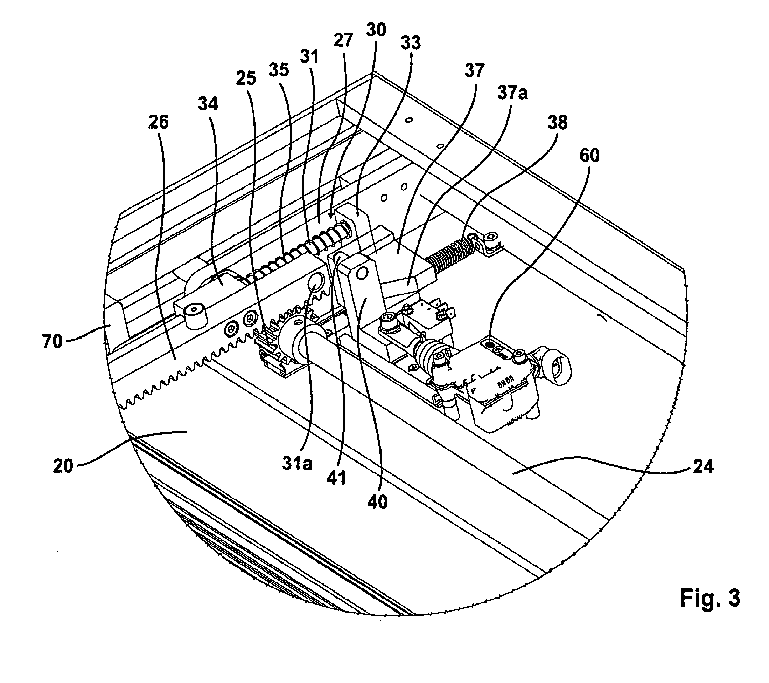

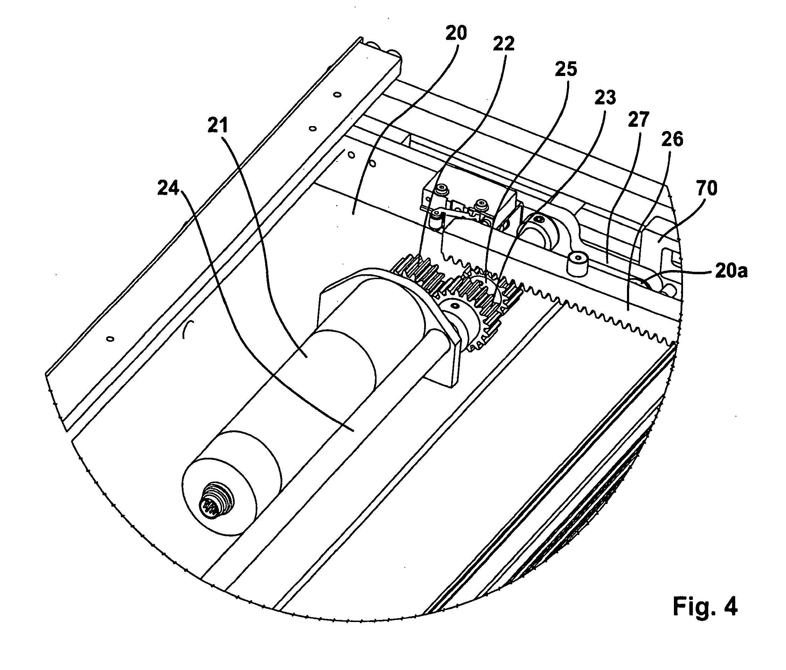

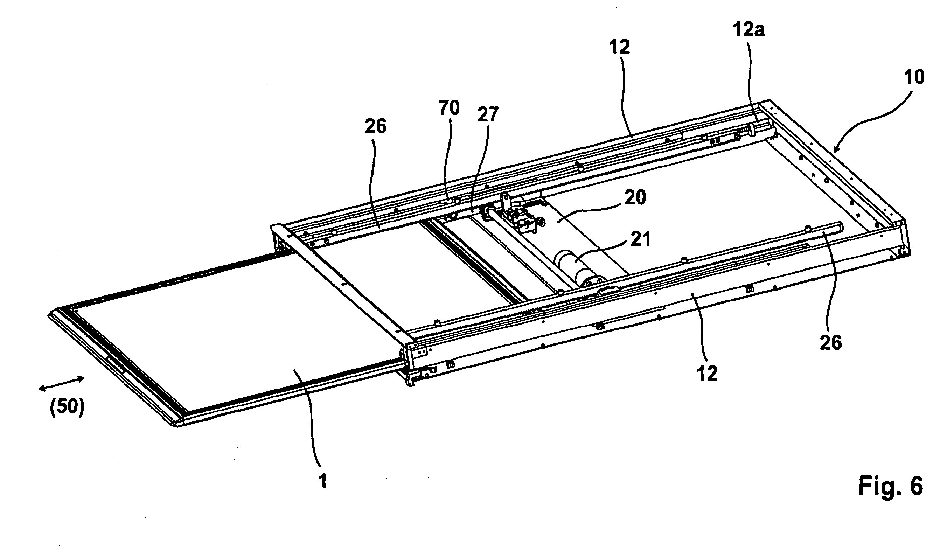

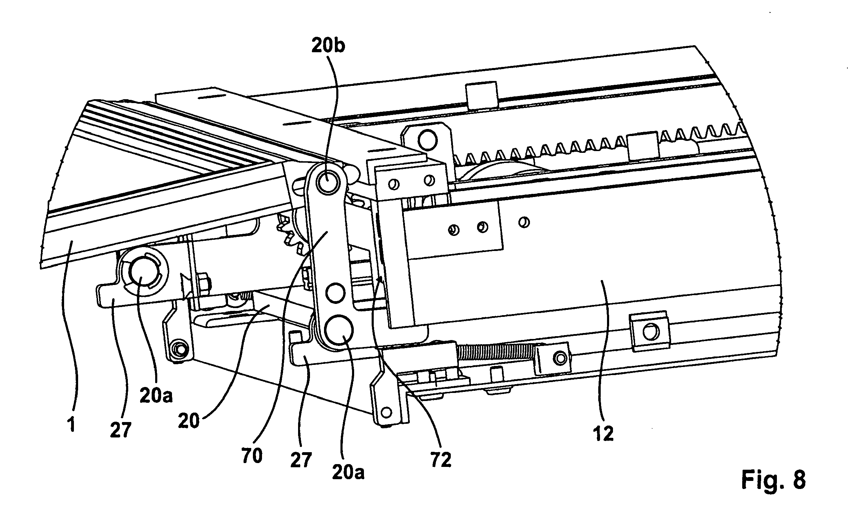

Das in Fig. 1 schematisch mit 2 bezeichnete Fahrzeug besitzt im Bereich des Türeinstiegs eine Aussparung zur Aufnahme der mit 10 bezeichneten Kassette zur Aufnahme der Rampe 1. Die Kassette 10 zeigt hierbei eine Abdeckplatte 11, die den Boden des Fahrzeugs bildet, bzw. sich unter dem Boden des Fahrzeugs befindet. Die mit 10 bezeichnete Kassette wird nun anhand der Figuren 2 ff. näher erläutert. Die Kassette 10 umfasst zwei Seitenwände 12, sowie eine Rückwand 13. Sowohl die Rückwand 13 als auch die Seitenwände 12 bilden zusammen mit der Abdeckplatte 11 (Fig. 1) und einer Bodenplatte 11 a die bereits erwähnte Kassette 10. Die Seitenwände 12 besitzen längs verlaufende Nuten 12a, in denen die Rampe 1 parallel zur Ausfahrrichtung gemäß dem Doppelpfeil 50 geführt ist (Fig. 6). Die Rampe 1 steht durch zwei Kniehebel 70 in gelenkiger Verbindung mit dem Schlitten 20 (Fig. 8), wobei die Kniehebel und die Bügel 27 die Verbindung zwischen Schlitten und Rampe bilden. Auf dem Schlitten 20 befindet sich der elektrische Antriebsmotor 21, wobei der Antriebsmotor 21, wie sich dies insbesondere in Anschauung von Fig. 4 ergibt, ein Abtriebsritzel 22 aufweist, das mit einem Übertragungsritzel 23 kämmt, das wiederum auf einer Achse 24 angeordnet ist, die an ihrem einen Ende das Ritzel 25 zeigt, das mit der Zahnstange 26 kämmt. Die Achse 24 zeigt an ihrem gegenüberliegenden Ende ebenfalls ein Ritzel 25 (Fig. 3), das mit der dortigen zweiten Zahnstange 26 in Eingriff steht. Die beiden parallel zueinander verlaufenden Zahnstangen 26 sind ortsfest, d. h., sie sind mit der Abdeckplatte 11 der Kassette 10 verbunden.

Bei Betrieb des Antriebsmotors 21 wird sich somit der Schlitten 20 entlang der beiden Zahnstangen bewegen. Da der Schlitten 20 mit der Rampe 1 auch durch die zu beiden Seiten angeordneten Bügel 27 und Kniehebel 70 (Fig. 3, Fig. 4) in Verbindung steht, wird bei Betätigung des Antriebsmotors 21 die Rampe 1, ebenso wie der Schlitten 20 in Richtung des Doppelpfeils 50 ausgefahren. In diesem Zusammenhang ist auf die Fig. 6 zu verweisen, die anschaulich die Stellung des Schlittens 20 bei einer teilweise ausgefahrenen Rampe 1 zeigt.

Die Kniehebel sind hierbei zu beiden Seiten der Rampe angeordnet und stehen sowohl in gelenkiger Verbindung mit der Rampe 1 als auch mit dem Schlitten 20 (Fig. 8).

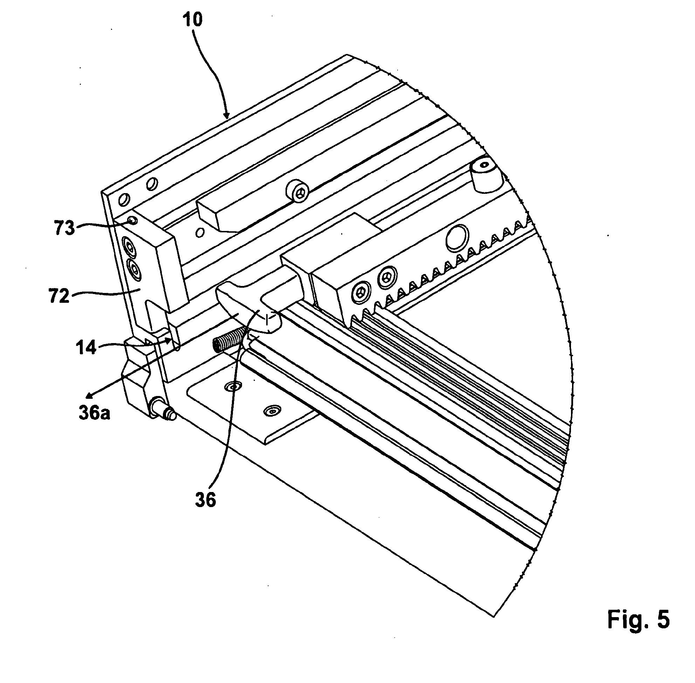

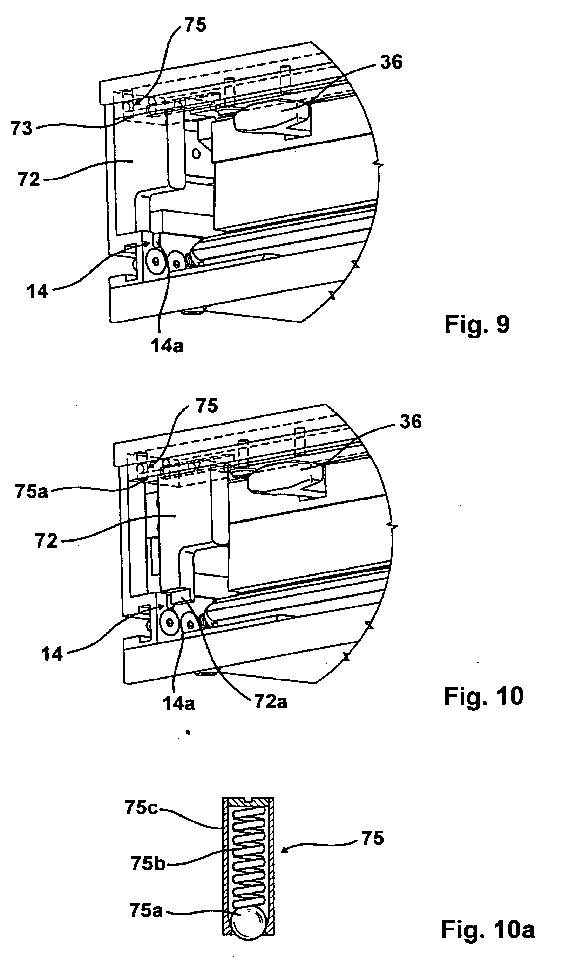

Gegenstand der Erfindung ist nunmehr auch die Riegeleinrichtung 30. Die Riegeleinrichtung 30 umfasst die Riegelstange 31 (Figur 3), die am Ende den Riegelbock 33 aufweist. Gelagert ist die Riegelstange 31 in dem Lagerbock 34, der an der Zahnstange 26 angeordnet ist. Zwischen dem Lagerbock 34 und dem Riegelbock 34 befindet sich eine Druckfeder 35, wobei bei Ziehen des Griffes 36 (Fig. 5) in Richtung des Pfeils 36a durch den Riegelbock 33 der Riegelstein 37, ebenfalls in Richtung des Pfeils 36a, entgegen der Kraft der Feder 38 gezogen wird, wobei der Riegelstein 37 eine Schräge 37a zeigt, die an dem Riegel 40 anliegt. Erkennbar besitzt der Riegel 40 einen Riegelstift 41, der in Eingriff mit einer entsprechenden Bohrung 31 a der Zahnstange 26 bringbar ist. Durch Verschieben des Riegelsteins 37 in Richtung des Pfeils 36a wird der mit 40 bezeichnete Riegel außer Eingriff mit der Bohrung 31 a in der Zahnstange gebracht. Hieraus folgt, dass nach einer solchen manuellen Entriegelung die Rampe 1 samt Schlitten 20 aus der Kassette 10 herausgezogen werden kann. Dies unter der Voraussetzung, dass die Anschläge 72 entfernt worden sind, die am vorderen Ende der Kassette zu beiden Seiten der Kassette angeordnet sind. Wie sich in diesem Zusammenhang aus den Fig. 9 bis 10a ergibt, ist in der Kassette 10 in der Abdeckplatte 11 ein federbelastetes Druckstück 75 vorgesehen. Das federbelastete Druckstück 75 umfasst eine Hülse 75c mit der durch eine Feder 75b belasteten Kugel 75a. Auf seiner Oberseite besitzt der Anschlag 72 eine schalenförmige Aussparung 73 für die Kugel 75a des Druckstücks. Gehalten ist der Anschlag 72 durch eine Nutführung 14, die quer zur Ausfahrrichtung verläuft. Im Einzelnen zeigt die Kassette eine Nut 14a und der Anschlag 72 eine Feder 72a, wobei die Feder 72a in der Nut 14a eingreift (Fig. 9, Fig. 10). Sind die beiden Anschläge 72 zu beiden Seiten der Rampe entfernt, kann die Rampe samt Schlitten herausgezogen werden und gegebenenfalls durch eine andere Rampe ausgetauscht werden.

Durch die Riegelstange 31 erfolgt, wie ausgeführt, eine manuelle Entriegelung, die notwendig ist, wenn zu Wartungszwecken oder zu Zwecken der Reparatur der Schlitten mit der darauf angeordneten Antriebseinrichtung zugänglich gemacht werden soll, wie die zuvor beschrieben wurde. Für den Normalbetrieb ist ein Elektromotor 60 vorgesehen, der mit dem Riegel 40 in Verbindung steht, wobei bei Betrieb des Elektromotors der Riegel 40 mit dem Riegelbolzen 41 ebenfalls außer Eingriff mit der Bohrung 31 a in der Zahnstange 26 gebracht wird.

Wie aus Fig. 2 und auch aus Fig. 8 erkennbar, ist an der Rampe 1 ein Kniehebel 70 angebracht. Der Kniehebel 70 steht, wie sich dies im Einzelnen aus Fig. 8 ergibt, mit dem Schlitten 20 durch ein Gelenk 20a und mit der Rampe 1 durch ein Gelenk 20b in Verbindung. Fährt der Kniehebel 70 in der liegenden Position, wie in Fig. 2 dargestellt, gegen den am vorderen Ende der Kassette angeordneten Anschlag 72, dann verschwenkt der Kniehebel 70 in die Position gemäß Fig. 8 und stellt, da er mit dem anderen Ende mit der Rampe 1 in Verbindung steht, die Rampe 1 auf, sodass diese einen oberflächengleichen Übergang von der Rampe in das Fahrzeuginnere ermöglicht.

## Patentansprüche

1. Vorrichtung zur ausfahrbaren Aufnahme einer Rampe (1), wobei die Vorrichtung an einem Fahrzeug (2) im Bereich eines Türeinstiegs anbringbar ist, wobei die Vorrichtung eine Antriebseinrichtung (20, 21, 26) für die Rampe (1) umfasst, wobei
die Antriebseinrichtung (20, 21, 26) einen Schlitten (20) aufweist, wobei der Schlitten (20) mit der Rampe (1) in Verbindung steht, wobei die Antriebseinrichtung mit mindestens einem am Fahrzeug angeordneten Kraftübertragungsglied (26) in Eingriff bringbar ist,
**dadurch gekennzeichnet,**
**dass** die Antriebseinrichtung einen auf dem Schlitten (20) angeordneten Antriebsmotor (21) aufweist, wobei der Schlitten (20) mit der Rampe (1) in Verbindung steht.

2. Vorrichtung nach Anspruch 1,
**dadurch gekennzeichnet,**
**dass** der Antriebsmotor (21) der Antriebeinrichtung mit dem mindestens einen Kraftübertragungsglied (26) in Verbindung steht.

3. Vorrichtung nach einem der voranstehenden Ansprüche,
**dadurch gekennzeichnet,**
**dass** das mindestens eine Kraftübertragungsglied als Zahnstange (26) ausgebildet ist, wobei der Antriebsmotor (21) durch mindestens ein Ritzel (22, 23, 25) mit der Zahnstange (26) in Verbindung steht.

4. Vorrichtung nach einem der voranstehenden Ansprüche,
**dadurch gekennzeichnet,**
**dass** zwei parallel zueinander verlaufende, am Fahrzeug angeordnete Kraftübertragungsglieder (26) vorgesehen sind, wobei der Antriebsmotor (21) mit beiden Kraftübertragungsgliedern (26) in Verbindung steht.

5. Vorrichtung nach einem der voranstehenden Ansprüche,
**dadurch gekennzeichnet,**
**dass** zwei parallel zueinander verlaufende Zahnstangen (26) am Fahrzeug (2) angeordnet sind, wobei der Antriebsmotor (21) durch mindestens ein Ritzel (22, 23, 25) mit der einen ersten Zahnstange (26) in Verbindung steht, und wobei das Ritzel (23, 25) eine Welle (24) aufweist, wobei die Welle (24) ein weiteres Ritzel (25) zeigt, das in Eingriff mit der anderen zweiten Zahnstange (26) steht.

6. Vorrichtung nach einem der voranstehenden Ansprüche,
**dadurch gekennzeichnet,**
**dass** die Vorrichtung eine Kassette (10) umfasst, wobei in der Kassette (10) die Rampe (1) und die Antriebseinrichtung (20, 21, 26) angeordnet sind, wobei die Kassette im Einbauzustand über der Rampe (1) eine Abdeckplatte (11) aufweist, an der die mindestens eine Zahnstange (26) befestigt ist.

7. Vorrichtung nach einem der voranstehenden Ansprüche,
**dadurch gekennzeichnet,**
**dass** die Kassette (10) eine Bodenplatte (11a) aufweist.

8. Vorrichtung nach einem der voranstehenden Ansprüche,
**dadurch gekennzeichnet,**
**dass** die Kassette (10) längs zur Ausstellrichtung der Rampe (1) Seitenwände (12) aufweist, wobei die Seitenwände (12) längs verlaufende Nuten (12a) zur geführten Aufnahme der Rampe (1) zeigen.

9. Vorrichtung nach einem der voranstehenden Ansprüche,
**dadurch gekennzeichnet,**
**dass** die Vorrichtung eine Riegeleinrichtung (30) für die Rampe (1) umfasst.

10. Vorrichtung nach einem der voranstehenden Ansprüche,
**dadurch gekennzeichnet,**
**dass** die Riegeleinrichtung (30) einen Riegel (40) umfasst, der auf dem Schlitten (20) anordbar ist, wobei der Riegel (40) in Eingriff mit einem feststehenden Teil der Vorrichtung bringbar ist.

11. Vorrichtung nach Anspruch 10,
**dadurch gekennzeichnet,**
**dass** der Riegel (40) in Eingriff mit dem Kraftübertragungsglied, insbesondere der Zahnstange (26) bringbar ist.

12. Vorrichtung nach einem der voranstehenden Ansprüche,
**dadurch gekennzeichnet,**
**dass** die Riegeleinrichtung (30) ein Entriegelungsglied (31) aufweist, wobei durch das Entriegelungsglied der Riegel (40) verschieblich ist.

13. Vorrichtung nach einem der voranstehenden Ansprüche,
**dadurch gekennzeichnet,**
**dass** das Entriegelungsglied als Stange (31) ausgebildet ist, die bis zum vorderen Ende der Kassette (10) reicht.

14. Vorrichtung nach einem der voranstehenden Ansprüche,
**dadurch gekennzeichnet,**
**dass** das Entriegelungsglied als motorischer Antrieb (60) ausgebildet, der mit dem Riegel (40) in Verbindung steht.

15. Vorrichtung nach einem der voranstehenden Ansprüche,
**dadurch gekennzeichnet,**
**dass** der Antriebsmotor (21) für die Rampe (1) auf dem Schlitten (20) angeordnet ist.

16. Vorrichtung nach einem der voranstehenden Ansprüche,
**dadurch gekennzeichnet,**
**dass** die Rampe (1) nach Art eines Scharniers mit dem Schlitten (20) in Verbindung steht.

17. Vorrichtung nach einem der voranstehenden Ansprüche,
**dadurch gekennzeichnet,**
**dass** die Rampe (1) am hinteren Ende mindestens einen Kniehebel (70) aufweist, der mit einem am vorderen Ende der Kassette (10) angeordneten Anschlag (72) derart zusammenwirkt, dass bei Auftreffen de Kniehebels (70) an dem Anschlag der Kniehebel (70) verschwenkt und die Rampe (1) am hinteren Ende aufschwenkt.

18. Vorrichtung nach einem der voranstehenden Ansprüche,
**dadurch gekennzeichnet,**
**dass** der Anschlag (72) quer zur Ausfahrrichtung der Rampe (1) durch eine Nutführung in der Kassette gehalten ist.

19. Vorrichtung nach Anspruch 18,
**dadurch gekennzeichnet,**
**dass** zur Arretierung des Anschlags (72) in der Kassette (10) ein federbelastetes Druckstück (75) vorgesehen ist.

## Claims

1. A device for extendable reception of a ramp (1), wherein the device is adapted to be mounted onto a vehicle (2) in the area of a door opening, wherein the device comprises a drive arrangement (20, 21, 26) for the ramp (1), wherein
the drive arrangement (20, 21, 26) has a slide (20), wherein the slide (20) is connected to the ramp (1), wherein the drive arrangement is adapted to be brought into engagement with at least one force transmission member (26) disposed on the vehicle,
**characterized in that**
the drive arrangement has a drive motor (21) disposed on the slide (20), wherein the slide (20) is connected to the ramp (1).

2. The device according to claim 1,
**characterized in that**
the drive motor (21) of the drive arrangement is connected to the at least one force transmission member (26).

3. The device according to one of the afore-mentioned claims,
**characterized in that**
the at least one force transmission member is configured as a rack (26), wherein the drive motor (21) is connected to the rack (26) by at least one pinion (22, 23, 25).

4. The device according to one of the afore-mentioned claims,
**characterized in that**
two force transmission members (26) are provided, which run parallel to each other and are disposed on the vehicle, wherein the drive motor (21) is connected to both force transmission members (26).

5. The device according to one of the afore-mentioned claims,
**characterized in that**
two racks (26) running parallel to each other are disposed on the vehicle (2), wherein the drive motor (21) is connected to the one first rack (26) by at least one pinion (22, 23, 25) and wherein the pinion (23, 25) has a shaft (24), wherein the shaft (24) has another pinion (25) that is engaged with the other second rack (26).

6. The device according to one of the afore-mentioned claims,
**characterized in that**
the device comprises a case (10), wherein the ramp (1) and the drive arrangement (20, 21, 26) are disposed in the case (10), wherein in the mounted state the case has a cover plate (11) above the ramp (1), to which the at least one rack (26) is fastened.

7. The device according to one of the afore-mentioned claims,
**characterized in that**
the case (10) has a base plate (11a).

8. The device according to one of the afore-mentioned claims,
**characterized in that**
the case (10) has side walls (12) along the direction of extension of the ramp (1), wherein the side walls (12) have longitudinally running grooves (12a) for receiving the ramp (1) in a guided manner.

9. The device according to one of the afore-mentioned claims,
**characterized in that**
the device comprises a locking arrangement (30) for the ramp (1).

10. The device according to one of the afore-mentioned claims,
**characterized in that**
the locking arrangement (30) comprises a bolt (40) that is disposable on the slide (20), wherein the bolt (40) is adapted to be brought into an engagement with a fixed part of the device.

11. The device according to claim 10,
**characterized in that**
the bolt (40) is adapted to be brought into an engagement with the force transmission member, more specifically with the rack (26).

12. The device according to one of the afore-mentioned claims,
**characterized in that**
the locking arrangement (30) has an unlocking member (31), wherein the bolt (40) is displaceable by the unlocking member.

13. The device according to one of the afore-mentioned claims,
**characterized in that**
the unlocking member is configured as a rod (31) that extends up to the front end of the case (10).

14. The device according to one of the afore-mentioned claims,
**characterized in that**
the unlocking member is configured as a motor drive (60) that is connected to the bolt (40).

15. The device according to one of the afore-mentioned claims,
**characterized in that**
the drive motor (21) for the ramp (1) is disposed on the slide (20).

16. The device according to one of the afore-mentioned claims,
**characterized in that**
the ramp (1) is connected to the slide (20) in a hinge-like manner.

17. The device according to one of the afore-mentioned claims,
**characterized in that**
the ramp (1) has at least one knee lever (70) at the rear end, which interacts with a limit stop (72) disposed at the front end of the cassette (10) in such a manner that when the knee lever (70) bears against the limit stop, the knee lever (70) pivots and the ramp (1) swings up at the rear end.

18. The device according to one of the afore-mentioned claims,
**characterized in that**
the limit stop (72) is held in the case transversely to the direction of extension of the ramp (1) by a groove guide.

19. The device according to claim 18,
**characterized in that**
a spring loaded pressure piece (75) is provided for adjusting the limit stop (72) in the case (10).

## Revendications

1. Dispositif pour loger une rampe (1) amovible, le dispositif étant adaptable à un véhicule (2) au niveau d'un escalier de porte, le dispositif comportant une installation d'entraînement (20, 21, 26) de la rampe (1), dans lequel
l'installation d'entraînement (20, 21, 26) comporte un coulisseau (20), le coulisseau (20) étant couplé à la rampe (1), l'installation d'entraînement pouvant être couplée avec au moins un élément de transmission de force (26) fixé au véhicule,
**caractérisé en ce que,**
l'installation d'entraînement comprend un moteur d'entraînement (21) monté sur le coulisseau (20), dans lequel le coulisseau (20) est couplé à la rampe (1).

2. Dispositif selon la revendication 1,
**caractérisé en ce que,**
le moteur d'entraînement (21) de l'installation d'entraînement est en liaison avec ledit au moins un élément de transmission de force (26).

3. Dispositif selon l'une des revendications précédentes,
**caractérisé en ce que,**
ledit au moins un élément de transmission de force est une crémaillère (26), le moteur d'entraînement (21) étant couplé à la crémaillère (26) par l'intermédiaire d'un pignon (22, 23, 25).

4. Dispositif selon l'une des revendications précédentes,
**caractérisé en ce qu'il,**
comporte deux éléments de transmission (26) montés parallèlement entre eux sur le véhicule, dans lequel le moteur d'entraînement (21) est couplé aux deux éléments de transmission (26).

5. Dispositif selon l'une des revendications précédentes,
**caractérisé en ce qu'il,**
comporte deux crémaillères (26) montées parallèlement entre elles sur le véhicule (2), le moteur d'entraînement (21) étant couplé à l'une, première crémaillère (26) par au moins un pignon (22, 23, 25) et le pignon (23, 25) comportant un arbre (24), l'arbre (24) ayant un deuxième pignon (25) qui est en prise avec l'autre seconde crémaillère (26).

6. Dispositif selon l'une des revendications précédentes,
**caractérisé en ce que,**
le dispositif comporte une cassette (10), dans lequel la cassette contient la rampe (1) et l'installation d'entraînement (20, 21, 26), dans lequel la cassette comporte dans son état prêt à être monté, une plaque de couverture (11) disposée par-dessus la rampe (1), à laquelle est fixée ladite au moins une crémaillère (26).

7. Dispositif selon l'une des revendications précédentes,
**caractérisé en ce que,**
la cassette (10) comporte une plaque de fond (11a).

8. Dispositif selon l'une des revendications précédentes,
**caractérisé en ce que,**
la cassette (10) comporte des parois latérales (12) dans la direction longitudinale d'extension de la rampe (1), les parois latérales (12) comportant des rainures (12a) s'étendant longitudinalement pour guider la rampe lors de sa mise en place.

9. Dispositif selon l'une des revendications précédentes,
**caractérisé en ce que,**
le dispositif comporte une installation de régulation (30) pour la rampe (1).

10. Dispositif selon l'une des revendications précédentes,
**caractérisé en ce que,**
l'installation de régulation (30) comporte un verrou (40) qui peut être monté sur le coulisseau (20), le verrou (40) étant agencé pour être mis en contact avec une partie fixe du dispositif.

11. Dispositif selon la revendication 10,
**caractérisé en ce que,**
le verrou (40) peut être mis en prise avec l'élément de transmission de force, en particulier la crémaillère (26).

12. Dispositif selon l'une des revendications précédentes,
**caractérisé en ce que,**
l'installation de régulation (30) comporte un organe de déverrouillage (31), dans lequel le verrou (40) est agencé pour coulisser sous l'action de l'organe de déverrouillage.

13. Dispositif selon l'une des revendications précédentes,
**caractérisé en ce que,**
l'organe de déverrouillage est configuré en tige (31) qui s'étend jusqu'à l'extrémité antérieure de la cassette (10).

14. Dispositif selon l'une des revendications précédentes,
**caractérisé en ce que,**
l'organe de déverrouillage est configuré en entraînement motorisé (60) qui est en contact avec le verrou (40).

15. Dispositif selon l'une des revendications précédentes,
**caractérisé en ce que,**
le moteur d'entraînement (21) de la rampe (1) est monté sur la coulisse (20).

16. Dispositif selon l'une des revendications précédentes,
**caractérisé en ce que,**
la rampe (1) est couplée au coulisseau (20) à la manière d'une charnière.

17. Dispositif selon l'une des revendications précédentes,
**caractérisé en ce que,**
la rampe (1) comporte à son extrémité postérieure au moins un levier coudé (70) qui coopère avec une butée (72) disposée à l'extrémité antérieure de la cassette (10) de telle manière que, lors d'un contact du levier coudé (70) avec la butée, le levier coudé (70) bascule et la rampe (1) bascule vers le haut à son extrémité arrière.

18. Dispositif selon l'une des revendications précédentes,
**caractérisé en ce que,**
la butée (72) est maintenue transversalement par rapport à la rampe (1) par la rainure de guidage de la cassette.

19. Dispositif selon la revendication 18,
**caractérisé en ce qu'il,**
comporte une pièce d'appui (75) sollicitée par un ressort agencé pour assurer l'arrêt de la butée (72) dans la cassette (10).
